Europäisches Patentamt

European Patent Office

Office européen des brevets

(11) Veröffentlichungsnummer: **0 054 602**
**B1**

(12) **EUROPÄISCHE PATENTSCHRIFT**

(45) Veröffentlichungstag der Patentschrift: **30.01.85**

(51) Int. Cl.⁴: **F 16 K 31/383**

(21) Anmeldenummer: **81100602.2**

(22) Anmeldetag: **28.01.81**

(54) **Eigenmediumgesteuertes Absperrventil.**

(30) Priorität: **19.12.80 CH 9394/80**

(43) Veröffentlichungstag der Anmeldung:
**30.06.82 Patentblatt 82/26**

(45) Bekanntmachung des Hinweises auf die
Patenterteilung:
**30.01.85 Patentblatt 85/05**

(84) Benannte Vertragsstaaten:
**DE FR GB IT SE**

(56) Entgegenhaltungen:
**CH-A- 417 257**
**CH-A- 528 693**
**DE-A-2 452 135**
**DE-A-2 919 606**
**FR-A-1 104 921**
**US-A-4 172 466**

(73) Patentinhaber: **GEBRÜDER SULZER
AKTIENGESELLSCHAFT
Zürcherstrasse 9
CH-8401 Winterthur (CH)**

(72) Erfinder: **Grotloh, Karlheinz
Im Morgentau 33d
CH-8408 Winterthur (CH)**

(74) Vertreter: **Dipl.-Ing. H. Marsch Dipl.-Ing. K.
Sparing Dipl.-Phys.Dr. W.H. Röhl Patentanwälte
Rethelstrasse 123
D-4000 Düsseldorf (DE)**

Courier Press, Leamington Spa, England.

## Beschreibung

Die Erfindung betrifft ein eigenmediumgesteuertes Absperrventil nach dem Oberbegriff des Anspruchs 1.

Ein solches Ventil ist aus der CH—A—528 693 bekannt. Bei diesem Absperrventil sind die beiden fernbedienbaren Abschlussventile, das Steuerventil und ein weiteres Steuerventil in einem Eigenmediumkanal, der zur zweiten Kammer des Servozylinders führt, sowie die beiden Rückschlagventile in der Wand des Gehäusedeckels des Absperrventils untergebracht. Dabei sind jeweils ein Abschlussventil und ein Steuerventil als ein Doppelfunktionsventil mit kolbenförmigen Verschlussteilen ausgebildet. Diese Verschlussteile sind in entsprechenden Bohrungen genau eingepasst. Das Absperrventil hat sich in der Praxis bewährt, es hat jedoch den Nachteil, dass seine Konstruktion sehr aufwendig ist, die auch fabrikatorisch hohe Ansprüche stellt und kostspielig ist.

Es ist Aufgabe der Erfindung, das bekannte Absperrventil konstruktiv und herstellungsmässig zu vereinfachen und damit zu verbilligen, ohne dass dadurch seine Betriebssicherheit beeinträchtigt würde. Diese Aufgabe wird erfindungsgemäss mit den Merkmalen des kennzeichnenden Teils des Anspruchs 1 gelöst.

Bei dem erfindungsgemäßen Absperrventil sind also die beiden Abschlussventile ausserhalb des Ventilgehäuses und/oder Deckels angeordnet, was ermöglicht, normale Ventile einfacherer Bauart zu verwenden, die jederzeit im Handel erhältlich sind. Damit entfällt ein wesentlicher Teil des konstruktiven und herstellungsmässigen Aufwandes für die bekannten Abschlussventile. Durch das erfindungsgemässe Abtrennen der zweiten Kammer des Servozylinders von der Eigenmediumzufuhr entfällt auch eines der beiden Steuerventile des bekannten Absperrventils, wodurch die Herstellungskosten des neuen Absperrventils ebenfalls verringert werden, und zwar ohne Beeinträchtigung der an den Betrieb des Absperrventils gestellten Anforderungen.

Ein weiterer Vorteil des neuen Absperrventils liegt darin, dass durch die Verringerung der Anzahl der bewegten Teile ein Teil der potentiellen Störungsquellen eliminiert und damit die Funktionssicherheit erheblich erhöht wird.

Durch die Merkmale des Anspruchs 3 kann im Falle eines Rohrbruches ein Austreten von eventuell kontaminiertem Medium aus dem Sicherheitsbehälter über die dem Betrieb des Absperrventils dienenden Verbindungs- und/oder Steuerleitungen vermieden werden.

Mit der Ausführungsform nach Anspruch 4 können durch Wärmedehnungen bedingte unsymmetrische Deformationen des Steuerventils, die dieses blockieren könnten, vermieden werden.

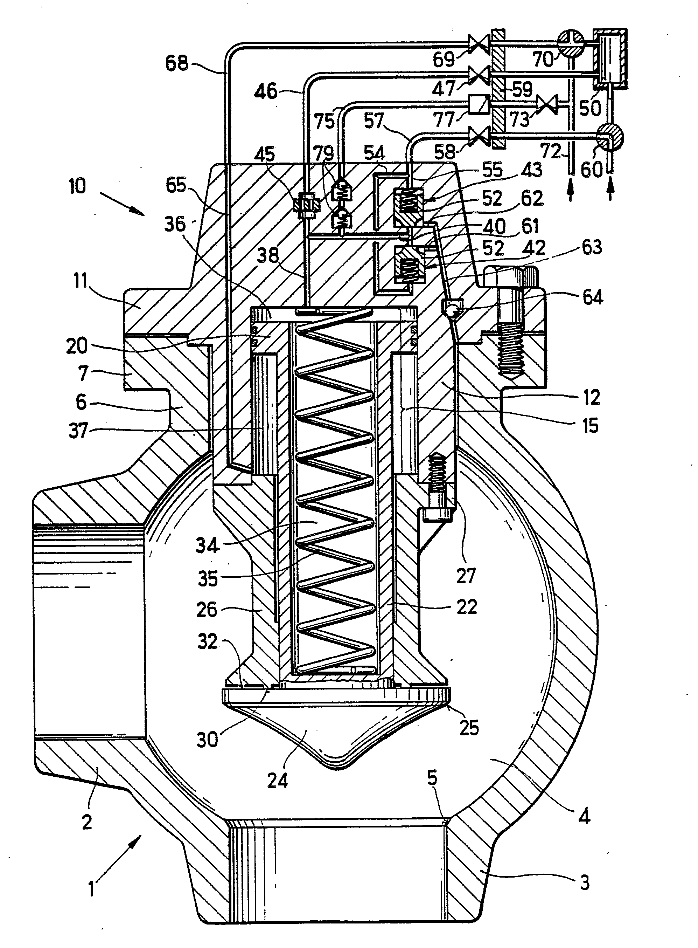

Ein Ausführungsbeispiel der Erfindung ist in der folgenden Beschreibung anhand der Zeichnung näher erläutert, die schematisch einen Schnitt durch ein Absperrventil zeigt.

Ein Ventilgehäuse 1 mit einem Eintrittstutzen 2, einem Austrittstutzen 3 und einem kugelförmigen Ventilraum 4 mit einem Ventilsitz 5 weist einen Stutzen 6 mit Flansch 7 auf. Auf diesem Flansch 7 ist über einen Flansch 11 ein Deckel 10 mittels Schrauben befestigt. Vom Deckel 10 ragt koaxial zum Flansch 11 eine einen Servozylinder 12 bildende Wand in den Ventilraum 4. Im Zylinderraum 15 des Servozylinders ist ein Servokolben 20 axial verschiebbar angeordnet. Der Kolben 20 sitzt auf einer Ventilspindel 22, die am dem Kolben 20 gegenüberliegenden Ende ein pilzförmiges Verschlussstück 24 trägt. Dieses Verschlussstück 24 weist eine konische Sitzfläche 25 auf, die mit dem Ventilsitz 5 im Ventilgehäuse 1 zusammenwirkt.

Die Ventilspindel 22 gleitet in einer Spindelführung 26, die über einen Flansch 27 mit der Stirnseite des Servozylinders 12 dicht verbunden ist. An der Spindelführung 26 ist eine Rücksitzfläche 30 vorgesehen, die mit einer entsprechend bearbeiteten Schulter 32 des Verschlussstückes 24 zusammenwirkt. Die Ventilspindel 22 weist von ihrer Kolbenseite her eine Sackbohrung 34 auf, in der eine Druckfeder 35 sitzt, die einerseits am Grunde der Sackbohrung 34 und andererseits an der oberen Stirnseite des Zylinderraums 15 sich abstützt.

Der Servokolben 20 unterteilt den Zylinderraum 15 in eine erste zylindrische Kammer 36 und eine zweite, ringförmige, dem Verschlussstück 24 zugewendete Kammer 37. Die erste Kammer 36 ist über einen Kanal 38 und eine Verbindungsleitung 46 mit einem fernbedienbaren Abschlussventil 47 an einen Druckentlastungsraum 50 angeschlossen, in dem ein tiefer Druck herrscht. Im Kanal 38 ist ein Drosselorgan 45 mit festem Oeffnungsquerschnitt angeordnet. Zwischen dem Drosselorgan 45 und der ersten Kammer 36 zweigt vom Kanal 38 ein Kanal 40 ab, der sich gabelt und stirnseitig in zwei Kammern von zwei koaxial zueinander angeordneten Steuerventilen 42 und 43 mündet.

In den beiden Kammern der Steuerventile 42 und 43 sitzt je ein axial verschiebbarer Ventilteil 52, der an der Stirnseite, ausserhalb einer zentralen, ebenen Dichtungsfläche, eine Andrehung mit viertelkreisförmigem Querschnitt, und vom anderen Ende her eine Sacklochbohrung aufweist. In den Sacklochbohrungen ist je eine Druckfeder untergebracht, die sich an den einander abgewendeten Stirnwänden der Steuerventilkammern abstützen. Die Kammern der beiden Steuerventile 42 und 43 sind an den einander abgewendeten Stirnwänden über Kanäle 54 und 55 mit einer Steuerleitung 57 verbunden, in der im Bereich einer Sicherheitsbehälterwand 59 ein fernbedienbares Abschlussventil 58 und ein Umschaltventil 60 vorgesehen sind. Ein Stutzen des Umschaltventils 60 ist mit einer nicht gezeichneten Steuermediumquelle und ein anderer Stutzen mit dem Druckentlastungsraum 50 verbunden. Am Rande der einander zugewendeten Stirnwände der Kammern der beiden Steuerventile 42 und 43 ist über je eine kurze Bohrung 61 bzw. 62 ein Eigenmediumkanal 63 mit einem Rückschalgventil 64 angeschlossen, der in den Ventilraum 4 mündet. Die erste Kammer 36 steht also über die Kanäle 38, 40, die Steuerventile 42, 43 und den Eigenmediumkanal 63 mit der Zulaufseite des Absperrventils in Verbindung.

Vom unteren Ende der zweiten Kammer 37 des Servozylinders 12 führt ein Kanal 65 über eine Verbindungsleitung 68 mit einem fernbedienbaren Abschlussventil 69 und einem Umschaltventil 70 zum Druckentlastungsraum 50. Das Umschaltventil 70 verbindet in der nicht gezeichneten Stellung die Leitung 68 mit einer ein Fremdmedium zuführenden Leitung 72. Von der Fremdmediumleitung 72 zweigt eine Fremdmedium-leitung 75 ab, die über ein Ventil 73 und ein Rüchschlagventil 77 sowie über ein Rückschlagventilpaar 79 am Kanal 38, 40 angeschlossen ist.

Das Absperrventil funktioniert wie folgt:

Im Normalbetrieb ist das Absperrventil offen, wobei es vom Eintrittsstutzen 2 her von einem heissen Druckmedium durchströmt wird. Das Absperrventil verharrt in dieser Position, weil über das in der gezeichneten Stellung befindliche Umschaltventil 60 die Steuerleitung 57 bei offenem Abschlussventil 58 von der nicht gezeichneten Steuermediumquelle her mit hochgespanntem Steuermedium gefüllt ist. Dieses Medium hält, unterstützt durch die in den Sacklöchern der Ventilteile 52 befindlichen Federn, die Steuerventile 42 und 43 in der Schliessstellung. Damit sind die erste Kammer 36 über den Kanal 38 mit dem Drosselorgan 45 sowie die Verbindungsleitung 46 mit dem offenen Abschlussventil 47 und die zweite Kammer 37 über den Kanal 65, die Verbindungsleitung 68 mit dem offenen Abschlussventil 69 und dem Umschaltventil 70 mit dem Druckentlastungsraum 50 verbunden, d.h. druckentlastet. Das Absperrventil wird durch den auf den Querschnitt innerhalb der Rücksitzfläche 30 wirkenden Druck des im Ventilraum 4 befindlichen Druckmediums gegen die Kraft der Druckfeder 35 und das Gewicht des gesamten beweglichen Systems, bestehend aus dem Servokolben 20, der Ventilspindel 22 und dem Verschlussstück 24, offengehalten.

Soll das Absperrventil geschlossen werden, so wird das Umschaltventil 60 aus der gezeichneten Stellung um 90° in Uhrzeigerrichtung verstellt, so dass die Steuerleitung 57 zum Druckentlastungsraum 50 hin entlastet wird. Unter der Wirkung des durch den Eigenmediumkanal 63 aus dem Ventilraum 4 zugeführten Druckmediums bewegen sich die Ventilteile 52 der beiden Steuerventile 42, 43 in die Offenstellung. Dadurch strömt Druckmedium aus dem Ventilraum 4 über den Eigenmediumkanal 63 und die Kanäle 40, 38 einerseits durch das Drosselorgan 45 und das offene Abschlussventil 47 in den Druckentlastungsraum 50 und andererseits in die erste Kammer 36. In dieser Kammer baut sich bei entsprechend dimensionierten Strömungsquerschnitten der Kanäle, der Verbindungsleitungen, der Ventile und des Drosselorgans 45 ein Druck auf, der nahe dem Druck im Ventilraum 4 liegt. Da der Servokolben 20 einen grösseren Aussendurchmesser aufweist als die Rücksitzfläche 30, bewegt sich unter den geschilderten Druckverhältnissen das Verschlussstück 24 in seine Schliessstellung, wobei Medium aus der zweiten Kammer 37 über das offene Abschlussventil 69 in den Druckentlastungsraum 50 gefördert wird.

Um den Verlust von Druckmedium über das Drosselorgan 45 und die Verbindungsleitung 46 in den Druckentlastungsraum 50 klein zu halten, kann mit dem Verstellen des Umschaltventils 60 zugleich das Abschlussventil 47 geschlossen werden.

Soll nun das unter dem Druck des im Ventilraum 4 befindlichen Druckmediums geschlossene Absperrventil wieder geöffnet werden, so wird das Umschaltventil 60 auf Steuermediumzufuhr verstellt, indem es in die gezeichnete Stellung zurückgedreht wird. Ist das Abschlussventil 47 geschlossen worden, so wird es nun wieder geöffnet. Da der Druck des Steuermediums in der Steuerleitung 57 höher ist als der im Ventilraum 4 anstehende Druck, bewegen sich die beiden Ventilteile 52 der Steuerventile 42, 43 in ihre Schliessstellung. Da dann Druckmedium aus dem Kanal 38 über das Drosselorgan 45 und die Verbindungsleitung 46 zum Druckentlastungsraum 50 abströmt, ohne dass über die Steuerventile 42 und 43 Druckmedium nachströmt, wird die erste Kammer 36 entlastet. Ist der Druck des Druckmediums stromunterhalb des Absperrventils im Vergleich zum tiefen Druck im Druckentlastungsraum 50 hoch genug, so öffnet sich das Absperrventil ohne weiteres. Ist dies nicht der Fall, so wird das Umschaltventil 70 um 90° im Gegenuhrzeigersinn gedreht, so dass Fremdmedium aus der Leitung 72 über das offene Abschlussventil 69, die Verbindungsleitung 68 und den Kanal 65 in die zweite Kammer 37 strömt. Unter der zusätzlichen Wirkung des Druckes des Fremdmediums in der zweiten Kammer 37 fährt nun das Absperrventil in die Offenstellung.

Je nach den vom Absperrventil zu erfüllenden Bedingungen wird man — abhängig vom Durchmesser des Ventilsitzes 5 und von den Querschnitten der Druckfeder 35 — die Durchmesser der Rücksitzfläche 30, des Servokolbens 20 und der Ventilspindel 22 bemessen. Durch die genannten Operationen kann das Absperrventil auch dann geöffnet werden, wenn an ihm kein Druck ansteht.

Soll das Absperrventil in drucklosem Zustand geschlossen werden und genügt bei offenem Abschlussventil 69 und bei in der gezeichneten Stellung befindlichem Umschaltventil 70 die Kraft der Druckfeder 35 — vermehrt um das Eigengewicht das beweglichen Systems 20, 22, 24 — nicht, um dieses zu bewegen, so lässt sich nach Oeffnen des Ventils 73 Fremdmedium über die Fremdmediumleitung 75, das Rückschlagventil 77, das Rückschlagventilpaar 79 und den Kanal 38 in die erste Kammer 36 einführen.

Das erfindungsgemässe Absperrventil hat die Eigenschaft, dass es bei brechender Steuerleitung 57 in die geschlossene Stellung fährt, wie dies z.B. für Isolierventile von Kernreaktoranlagen verlangt wird.

Die Anordnung des Rückschlagventils 77 sowie der Abschlussventile 69, 47 und 58 ist so getroffen, dass im Falle eines Rohrbruchs, beispielsweise mit Hilfe einer zusätzlichen auf die Abschlussventile wirkenden Sicherheitslogik-Schaltung, vermieden werden kann, dass gegebenenfalls kontaminiertes Medium über die die Sicherheitsbehälterwand 59 durchdringenden Leitungen 68, 46, 75 und 57 ins Freie tritt.

Der Druckentlastungsraum 50 kann beispielsweise der Kondensator einer Dampfturbinenanlage sein.

Das Drosselorgan 45 weist aus Redundanzgründen zwei Druchtrittsöffnungen auf, in der Meinung, es sei wenig wahrscheinlich, das zwei parallele Oeffnungen gleichzeitig verstopft würden. Je nach Analyse der möglichen Störungen kann auch eine einzige Drosselöffnung vorgesehen werden, der gegebenenfalls ein Sieb grösseren Gesamtöffnungsquerschnittes vorgeschaltet ist.

Aus Redundanzgründen kann es auch zweckmässig sein, anstelle des Rückschlagventils 64 im Eigenmediumkanal 63 ein Paar von parallelgeschalteten Rückschlagventilen anzuordnen.

Dem Drosselorgan 45 fällt die Aufgabe zu, ein zu rasches Entweichen von Druckmedium aus dem Kanal 38 zu vermeiden, wenn bei leckender Verbindungsleitung 46 das Absperrventil in die Schliessstellung gefahren werden soll. Sein Drosselquerschnitt ist entsprechend zu bemessen. Damit nimmt das Absperrventil — auch wenn alle Verbindungsleitungen brechen sollten — die aus Sicherheitsgründen geforderte Schliessstellung ein.

Bei passender Dimensionierung der Federn in den Sackbohrungen der Ventilteile 52 der Steuerventile 42 und 43 und bei genügendem Radialspiel dieser Ventilteile 52 oder bei Anbringen einer dazu parallelen Drosselöffnung, kann auf das Umschaltventil 60 verzichtet und die Steuerleitung 57 über das Abschlussventil 58 direkt mit dem Druckentlastungsraum 50 verbunden werden. In einem solchen Falle würde sich bei geschlossenem Abschlussventil 58 in der Steuerleitung 57 infolge Leckage an den Ventilteilen 52 der im Eigenmediumkanal 63 herrschende Druck aufbauen. Wird dann durch Oeffnen des Abschlussventils 58 die Steuerleitung 57 entlastet, so öffnen die Steuerventile 42 und 43, und umgekehrt schliessen diese Steuerventile unter der Wirkung der in den Sackbohrungen der Ventilteile 52 angeordneten Federn, wenn das Abschlussventil 58 geschlossen wird.

Dem Abschlussventil 58 kommt vom Sicherheitsstandpunkt aus eine sehr hohe Bedeutung zu. Es kann daher zweckmässig sein, ohm ein redundantes Ventil in Parallelschaltung zuzuordnen.

Selbstverständlich können die Abschlussventile 47, 58 und 69 und das Rückschlagventil 77 auch an der Aussenseite der Sicherheitsbehälterwand 59 angeordnet werden, so dass sie jederzeit zugänglich und kontrollierbar sind.

## Patentansprüche

1. Eigenmediumgesteuertes Absperrventil, insbesondere Dampfisolierventil zu Kernreaktoranlagen, mit einer Ventilspindel (22), die einerseits ein Verschlussstück (24) und andererseits einen in einem Servozylinder (12) verschiebbaren Servokolben (20) trägt, der den Raum des Servozylinders (12) in eine erste, zylindrische Kammer (36) und in eine zweite, dem Verschlusstück (24) zugewendete, ringförmige Kammer (37) trennt, wobei beide Kammern (36, 37) über je einen im Gehäuse (1) und/oder Deckel (10) des Absperrventils verlaufenden ersten (38), bzw. zweiten (65) Kanal sowie je eine daran anschliessende und ausserhalb des Gehäuses (1) und/oder Deckels (10) angeordnete erste (46), bzw. zweite (68) Verbindungsleitung an einen Druckentlastungsraum (50) angeschlossen sind und ausserdem die erste Kammer (36) über einen im Gehäuse (1) und/oder Deckel (10) verlaufenden Eigenmediumkanal (63) mit mindestens einem über eine Steuerleitung (57) betätigbaren Steuerventil (42) an die Zufuhrseite des Absperrventils angeschlossen ist, wobei ferner zwischen derm Druckentlastungsraum (50) einerseits und der ersten und der zweiten Kammer andererseits je ein fernbedienbares erstes (47), bzw. zweites (69) Abschlussventil vorgesehen ist und im Eigenmediumkanal (63) mindestens ein Rüchschlagventil (64) angeordet ist und wobei die erste Kammer (36) über mindestens ein weiteres im Gehäuse (1) und/oder Deckel (10) angeordnetes Rückschalgventil (79) mit einer Fremdmediumzufuhrleitung (75) und auch die zweite Kammer (37) mit einer Fremdmediumzufuhrleitung (72) verbunden ist, dadurch gekennzeichnet, dass in dem von der ersten Kammer (36) ausgehenden ersten Kanal (38) ein festes Drosselorgan (45) vorgesehen ist, dass das zwischen dem Druckentlastungsraum (50) und der ersten Kammer (36) vorgesehene erste Abschlussventil (47) sich in der ersten Verbindungsleitung (46) befindet, dass die zweite Kammer (37) von einer Eigenmediumzufuhr von der Zulaufseite des Absperrventils her abgegrennt ist und dass das zwischen dem Druckentlastungsraum (50) und der zweiten Kammer (37) vorgesehene zweite Abschlussventil (69) sich in der zweiten Verbindungsleitung (68) befindet.

2. Absperrventil nach Anspruch 1, dadurch gekennzeichnet, dass in der zur ersten Kammer (36) führenden Fremdmediumzuführleitung (75) eine Rückschlagklappe (77) und in der Steuerleitung (57) ein fernbedienbares Abschlussventil (58) angeordnet sind.

3. Absperrventil nach Anspruch 2, für Kernreaktoranlagen, dadurch gekennzeichnet, dass die in der zur ersten Kammer (36) führenden Fremdmediumzuführleitung (75) angeordnete Rückschlagklappe (77) und die in der Steuerleitung (57) sowie in den Verbindungsleitungen (46, 68) befindlichen drei Abschlussventile (58, 47 bzw. 69) in der Nähe einer Sicherheitsbehälterwand (59) angeordnet sind.

4. Absperrventil nach einem der Ansprüche 1 bis 3, mit zwei redundanten Steuerventilen (42, 43), dadurch gekennzeichnet, dass beide Steuerventile (42, 43) koaxial zueinander im Gehäusedeckel (10) untergebracht sind.

**Revendications**

1. Soupape d'arrêt commandée par son fluide propre, en particulier, soupape d'isolement de vapeur pour installations de réacteur nucléaire, comprenant un arbre de soupape (22) qui porte d'une part une pièce de fermeture (24) et, d'autre part, un servopiston (20) déplaçable dans un servocylindre (12) et qui sépare l'espace du servocylindre (12) en une première chambre cylindrique (36) et en une deuxième chambre (37) annulaire tournée vers la pièce de fermeture (24), les deux chambres (36, 37) étant raccordées, par l'intermédiaire d'un premier (38) ou d'un deuxième (65) canal respectifs s'étendant dans le boîtier (1) et/ou le couvercle (10) de la soupape d'arrêt, ainsi que par une première (46) ou une deuxième (68) conduite de liaison qui s'y raccorde et qui se trouve à l'extérieur du boîtier (1) et/ou du couvercle (10), à un espace (50) de décharge de pression, et en outre, la première chambre (36) étant raccordée, par l'intermédiaire d'un canal (63) de son propre fluide s'étendant dans le boîtier (1) et/ou le couvercle (10), à au moins une soupape de commande (42) actionnable par une conduite de commande (57), sur le côté d'arrivée de la soupape d'arrêt, tandis qu'en outre, entre l'espace (50) de décharge de pression, d'une part, et la première et la seconde chambre, d'autre part, est prévue une première (47) ou une seconde (69) soupape de fermeture respective télécommandable et dans le canal (63) de fluide propre est disposée au moins une soupape de retour (64), la première chambre (36) étant alors reliée par l'intermédiaire une autre soupape de retour (79) disposée dans le boîtier (1) et/ou le couvercle (10) à une conduite (75) d'arrivée d'un fluide étranger et la deuxième chambre (37) étant également reliée à une conduite (72) d'arrivée de fluide étranger, soupape caractérisée en ce que dans le premier canal (38) partant de la première chambre (36) est prévu un organe fixe d'étranglement (45), en ce que la première soupape de fermeture (47), prévue entre l'espace (50) de décharge de pression et la première chambre (36), se trouve dans la première conduite de liaison (46), en ce que la deuxième chambre (37) est séparée par une arrivée de son propre fluide du côté d'arrivée de la soupape d'arrêt, et en ce que la deuxième soupape de fermeture (69), prévue entre l'espace (50) de décharge de pression et la deuxième chambre (37), se trouve dans la deuxième conduite (68) de liaison.

2. Soupape d'arrêt selon la revendication 1, caractérisée en ce que, dans la conduite (75) d'arrivée de fluide étranger menant à la première chambre (36), on dispose un volet de retour (77) et dans la conduite de commande (57), une soupape de fermeture (58) télécommandable.

3. Soupape d'arrêt selon la revendication 2, pour des installations de réacteur nucléaire, caractérisée en ce que le volet de retour (77) placé dans la conduite (75) d'arrivée de fluide étranger menant à la première chambre (36), et les trois soupapes de fermeture (58, 47 ou 69) se trouvant dans la conduite de commande (57) ainsi que dans les conduites de liaison (46, 68), sont disposés au voisinage d'une paroi (59) de récipient de sécurité.

4. Soupape d'arrêt selon l'une des revendications 1 à 3, ayant deux soupapes de commande (42, 43) redondantes, caractérisée en ce que les deux soupapes de commande (42, 43) sont placées coaxialement l'une par rapport à l'autre dans le couvercle (10) du boîtier.

**Claims**

1. A stop valve controlled by its own medium, more particularly a steam isolating valve for nuclear reactor plants, comprising a valve stem (22) bearing a valve head (24) at one end and a servo-piston (20) at the other end, the servo-piston (20) being slidable in a servo-cylinder (12) and dividing the servo-cylinder space into a first cylindrical chamber (36) and a second annular chamber (37) adjacent the valve head (24), the two chambers (36, 37) each being connected to a pressure relief chamber (50) via respectively a first duct (38) and a second duct (65) in the valve body (1) and/or cover (10) and via respectively a first connecting conduit (46) and a second connecting conduit (68) connected to the said ducts and disposed outside the valve body (1) and/or cover (10), and in addition the first chamber (36) is connected to the valve inlet side via an own-medium duct (63) extending in the valve body (1) and/or cover (10) and having at least one control valve (42) adapted to be actuated via a control conduit (57), a remote-controllable first shut-off valve (47) and second shut-off valve (69) being provided between the pressure relief chamber (50) on the one hand and respectively the first and the second chamber on the other hand, and at least one non-return valve (64) is disposed in the own-medium duct (63), the first chamber (36) being connected to an external-medium supply conduit (75) via at least one other non-return valve (79) disposed in the valve body (1) and/or cover (10) and the second chamber (37) also being connected to an external-medium supply conduit (72), characterised in that the first duct (38) leading from the first chamber (36) contains a fixed throttle means (45); the first shut-off valve (47) provided between the pressure relief chamber (50) and the first chamber (36) is situated in the first connecting conduit (46); the second chamber (37) is separated from an own-medium supply from the inlet side of the stop valve; and the second shut-off valve (69) provided between the pressure relief chamber (50) and the second chamber (37) is situated in the second connecting conduit (68).

2. A stop valve according to claim 1, characterised in that a non-return valve (77) is provided in the external-medium supply conduit (75) leading to the first chamber (36) and a remote-controllable shut-off valve (58) is disposed in the control conduit (57).

3. A stop valve according to claim 2, for nuclear reactor plants, characterised in that the non-return valve (77) disposed in the external-medium supply conduit (75) leading to the first chamber (36) and the three shut-off valves (58, 47 and 69) situated in the control conduit (57) and in the connecting conduits (46, 48) are disposed near a safety vessel wall (59).

4. A stop valve according to any one of claims 1 to 3, having two redundant control valves (42, 43), characterised in that the two control valves (42, 43) are accommodated coaxially of one another in the valve body cover (10).